# EUROPEAN PATENT SPECIFICATION

(11) **EP 3 337 363 B1**
(45) Date of publication and mention of the grant of the patent: **18.09.2019**
(21) Application number: 15781740.4
(22) Date of filing: 17.09.2015
(51) Int. Cl.: A47J 31/18, A47J 31/40

(54) **AUTOMATIC TEA MAKER AND ITS METHOD OF OPERATION**
AUTOMATISCHER TEEKOCHER UND VERFAHREN ZUM BETRIEB
MACHINE DE PRÉPARATION DE THÉ AUTOMATIQUE ET SON PROCÉDÉ DE FONCTIONNEMENT

(30) Priority: 18.08.2015 LT 2015074
(43) Date of publication of application: 27.06.2018
(73) Proprietor: UAB "Kleismantas", 76352 Siauliai (LT)
(72) Inventor: KLEISMANTAS, Giedrius, 76340 Siauliai (LT)
(74) Representative: Kiskis, Vaclovas
(86) International application number: PCT/IB2015/057170
(87) International publication number: WO 2017/029541

(56) References cited:
- DE-A1-102006 031 357
- US-A1- 2012 304 868

## Description

### TECHNICAL FIELD

The invention belongs to food industry, more particularly - to professional tea making devices when tea is brewed from natural, dry, powdery tea leaves or herbs with additives.

### BACKGROUND ART

With regard to numerous technical solutions and spread of industrial automatic coffee and tea makers available on the market, it is evident that there exists big variety of automatic coffee makers, while the number of automatic tea makers is small, and the available technical solutions have numerous defects.

The differences in coffee and tea makers are caused by such factors as structure of raw material, character of thick, etc. The raw material of tea is dry, loose, rolled-up leaves of various sizes of small comparative weight or particles of tea fraction crushed to certain size. When coffee is made, it is pressed and the heated water is let through it under high pressure. However such method is not suitable for tea. The structure of coffee and tea thick is also different. The coffee thick is the pressed cake, while the tea thick is soft and powdery. The dosage in coffee makers is often carried out together with grinding of coffee beans, while the crushing and dosage in tea makers are very particular processes, which need different methods and equipment.

One tea maker is known (see patent No. US2014157993), where tea is prepared in a coffee maker. The dose of tea leaves for one cup is pre-packed in tea pads. It is fully prepared, contains condiment, etc. If the mixture of ingredients in the pad is undesirable, the pad may consist of several sections. The pads are made in the round form to put them into the chamber of coffee maker easier. This method is suitable only for semi-automatic tea makers and do not suit for the automatic ones.

Another automatic tea maker is known (see patent No. US2012304868), where tea is made from tea leaves and the problem of dosage of tea leaves is being solved. The tea leaves are dosed by screw dosage device. The tea is brewed up in tea boiling pot and pumped out from it. Then the pot is overturned and the tea thick is shaken out. The drawback of this invention is that tea is made from tea leaves of one sort because it is impossible to dose the tea mixtures.

One coffee and tea dosing device is known (see patent No. WO2012024265), where dosing is carried out with the help of plates sliding with regard to each other, which have holes. Such method suits only to dose the single pre-determined dosage and cannot be changed expeditiously.

In case of the present invention, we suggest using the automatic coffee maker to prepare tea upon having made constructive improvements, having selected and prepared the mixtures of tea and spices accordingly.

The automatic tea makers need special tea preparation thus the tea preparation method suggested in this invention is meant for the suggested automatic tea maker.

### DISCLOSURE OF INVENTION

In order to achieve the goal specified above, we suggest the automatic tea maker, where the automatic coffee maker would be used. It comprises the containers for tea leaves and condiment products, condiment dosing device, tea leaves' dosing device with a gear, reducer of water pressure, water and vapour heaters, tea making module with thick-removal device, gear of tea making module, tea release device, container of thick, control unit of machine and display with remote control. The tea leaves' dosing device comprises two inter-touching dosing and directing discs. The dosing disc has radial grooves and is put on the gear axle. The directing disc is stationary and is concave. It has a central hole and touches with the plane of dosing disc by the circular band going around its edge. The diagonal teeth are made in the concave surface of the directing disc from the central hole to the circular band. Moreover, the tea making module has position sensors, which are connected with the control unit of the machine and which may control the size of chamber of tea making module and compression degree depending on the required dose of tea leaves. Besides, the volume of the chamber of tea making module is set such as to have the dose of dry tea leaves inside the chamber without any mechanical pressure.

The invention's features in more detail: the dosing disc has semicircular radial grooves, which diameter is 3-10 mm, better 3,5 mm, while the teeth of directing disc are in the form of irregular triangle. The width of circular band is 1-4 mm.

In order to make tea of good quality in the automatic tea maker, the special method of preparation is used. It covers the following steps: crushing of tea leaves down to the following fraction - black tea - down to 0,67 mm size, green tea - down to 0,2 mm; making of tea mixture from 77 - 93% of black tea and 7 - 23 % of green tea; putting of the mixture into the container of tea leaves in the machine; dosage of one portion - 1 portion (200ml) of tea needs 2-6 g (better 5,2 g) of tea mixture; filling of the tea making module's chamber with tea leaves without any mechanical pressure; letting water through the tea making chamber with tea leaves (pressure - 1,2-1,6 bar, temperature 96-98°C, time 20 s), supplementing of prepared tea with additives (condiment and natural milk).

### DESCRIPTION OF DRAWINGS

The invention is illustrated with the drawings Fig. 1, Fig. 2 and Fig. 3.
Fig.1 - structural scheme of automatic tea maker,
Fig.2 - tea dosing device: Fig. 2a general image in the layer, Fig.2b image in the layer A-A,
Fig.3 - operation of tea making module.

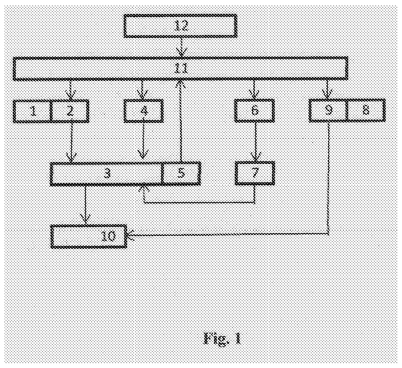

The automatic tea maker (Fig.1), where the automatic coffee maker is used, consists of the following key units: container of tea mixture 1, tea leaves' dosing device 2, tea making module 3, gear of tea making module 4, position sensors 5, reducer of water pressure and water pump 6, water heating unit 7, condiment container 8, control unit of condiment 9, tea release device 10, electronic control unit of machine 11, and display with remote control 12.

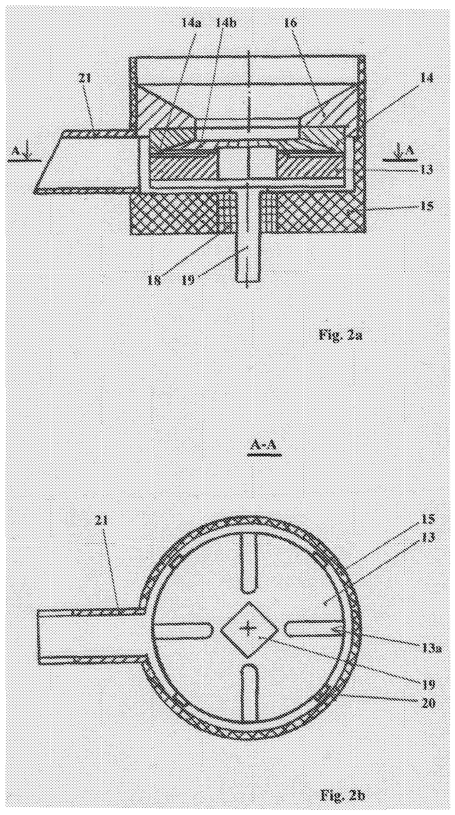

The tea leaves' dosing device 2 (Fig. 2) consists of the dosing 13 and directing 14 discs, body 15, and funnel 16. The axle 19 is installed in the body's 15 bearing 18. The dosing disc 13 and guiding vanes 20 are put on the axle. The directing disc 14 is connected with the funnel 16 and fixed in the body 15. The tea deflection duct 21 is made in the body. The axle 19 is connected with the gear of the dosing disc. The container with open bottom for tea leaves is put on the funnel 16 (it is not shown in the Fig. 2).

Four semicircular radial grooves 13a are made in the dosing disc 13. The directing disc 14 has a central hole and circular band 14a along the perimeter. It is used to contact with the working surface of the dosing disc. The diagonal teeth 14b are made in the concave surface of the directing disc 14 from the central hole to the circular band.

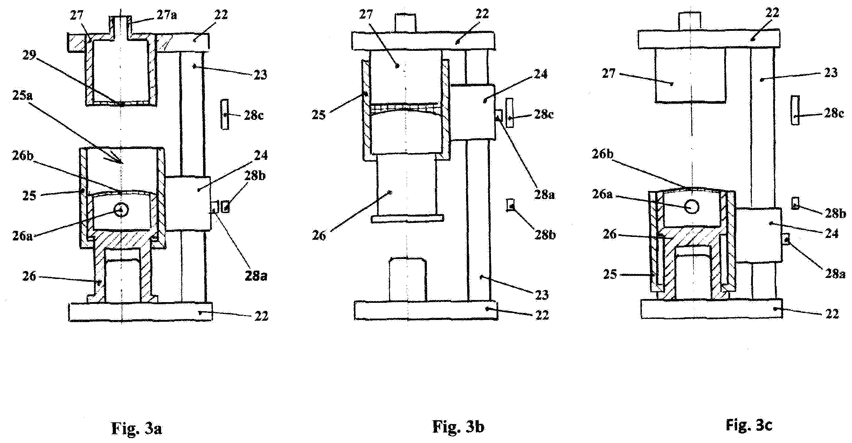

The Fig. 3 shows tea making module in 3 (three) positions: a) ready to pour dose of tea leaves, b) position of tea making, c) position of removal of tea thick.

The tea making module 3 consists of the body 22, gear made from the screw 23 and slipper 24, cylinder 25, movable piston 26, stationary piston 27, and position sensor 28. The cylinder 25 is attached to the slipper 24. The cylinder's 25 hole of tea making module 3 in the Fig. 3a position is conditionally called tea making chamber 25a. The piston 26 is installed in the cylinder 25 and may move inside of it. Besides, there is a hole to feed hot water 26a in the piston 26. It is used to feed hot water from water heating unit 7. The holes 26b made in its upper part are used to allow hot water getting into the chamber 25a. The nipple 27a for tea outlet is made in the piston 27. The mesh 29 is attached to its lower part to allow pumping the tea to tea release device 10. The tea making module 3 has a position sensor 28, which movable part 28a is fastened to the slipper 24, while the stationary parts 28b and 28c are attached to the body 22. One position of the stationary sensor 28b sets the position of the slipper 24 with cylinder 25 prepared for pouring of tea leaves' dose, while the other position of stationary sensor 28c sets the position of tea making module 3 at the time of tea making. The stationary sensor 28c has several fixed positions.

The automatic tea maker is controlled with the help of remote control 12, and the information is shown on the display. All the units of automatic tea maker are controlled by electronic control unit 11.

### MODE FOR CARRYING OUT THE INVENTION

The tea making process is performed in the following way: hot water is fed to the hot water's piston 26. Hot water gets to the chamber 25a of the cylinder 25 through the holes of the piston 26. The tea fermentation is done and tea is directed to the cup through the mesh 29 of the piston 27 with the help of tea release device 10. Upon preparation of the tea portion, the electronic control unit 11 gives a command to open a making chamber 25a and to clean the thick of tea. The gear of the dosing device 2 operates until the piston of hot water 26 with the cylinder 25 reaches the body 22. The position of making module with regard to thick cleaning is shown in the Fig. 3c.

The operation of tea leaves' dosing device 2 and tea making module 3 of the automatic tea maker will be described in more detail.

The tea leaves get into the cavity between the dosing 13 and directing 14 discs from the tea leaves' container 1 through the funnel 16 and central hole of the directing disc. When the gear of the dosing device 2 is get into, the diagonal teeth 14b of the directing disc 14 push tea leaves in the grooves 13a outwards of the dosing disc 13, while the guiding vanes 20 push them into the duct 21, from which they move to the chamber 25a of tea making module 3. The tea leaves' dose depends on the operation time of the gear and rotation time of the dosing disc 13.

Following the command of the remote control and the control unit of the machine, the tea making module 3 is set for the position indicated in the Fig. 3a. The gear of the dosing device 2 gets into, the dosing disc 13 starts rotating, throwing tea by the grooves 13a. The guiding vanes 20 direct tea leaves to the tea deflection duct 21, through which tea leaves reach the chamber 25a of the tea making module. The dose of tea leaves is set by the remote control 12. Accordingly the electronic control unit 11 sets the operation time of the gear of dosing device 2, as the dose depends directly on its operation time. Moreover, the electronic control unit 11 selects the position of sensor 28c, where the slipper 24 with the cylinder 25 and piston 26 have to end (Fig. 3b). In order to make tea, it is necessary to have the cylinder 25 of the tea making module 3 with the pistons 26 and 27 close the tea chamber 25a without any mechanical compression of tea leaves.

One of the most important requirements for automatic tea maker is tea brewing time. The shorter it is the more efficient the machine is. In order to achieve this, the tea fermentation period has to be as short as possible. It depends on the sort and structure of tea leaves. The experiments showed that in order to make tasty tea, the tea mixtures and not some single sort of tea have to be used. The tea sorts have to be crushed separately and then blended well.

Suggested method for tea preparation and making:
tea leaves are crushed down to the following fraction - black tea - down to 0,6 mm size, green tea - down to 0,3 mm;
the tea mixture is made from 77 - 93% of black tea and 3-10 % of green tea; the best proportion is 93% of black tea and 7% of green tea;
tea leaves are poured into the container of automatic tea maker;
one portion of tea is dosed in the tea maker - 200 ml of tea needs 2-8 g (better 5,2 g) of tea mixture;
the tea making chamber is filled with tea leaves without any mechanical pressure;
hot water is let through the tea making chamber with tea leaves (pressure - 1,2-1,6 bar, temperature 96-98°C, brewing time 20 s);
prepared tea is supplemented with additives (spices, sugar, milk).

### OPERATION OF AUTOMATIC TEA MAKER

When the desired programme (strength of tea, condiment, etc.) is selected, the machine is launched. The tea leaves' dosing device 2 is switched on in accordance with the encoded amount of tea leaves. It pours dose of tea mixture into the chamber 25a of the tea making module 3. Then the chamber 25a closes (Fig.3b). Owing to the sensor 28c the chamber closes in such a way that the tea dose would not be compressed in the chamber 25a). The holes 26b in the upper part of the piston 26 serve to feed hot water of 96 - 98°C temperature and at pressure of 1,2 - 1,6 bars. It rinses tea leaves through the mesh 29 installed in the piston 27. The tea release device 10 allows pouring tea into the cup. This process lasts for 20 s. Then condiment is poured according to the programme encoded in the beginning. The tea making module 3 passes to the stage of thick removal (Fig. 3c). When the thick is removed mechanically from the cylinder 25 and the piston 26 (the pushing mechanism is not shown in the Fig. 3c), the tea making module 3 returns to the position shown in the Fig. 3a. The machine gets ready to make another dose of tea.

Specific example of the invention's realisation. The described construction and its operation were implemented with the automatic coffee maker WMF 1400S of the company WMF (see User Manual WMF 1400 at www.wmf-coffeemachines.com) where the suggested dosing device 2, sensor of tea making position 28 were installed, the electronic control unit 11 was programmed anew, and the new remote control with display 12 was made.

The suggested improvements provide a possibility to adjust the automatic coffee maker to make tea. The suggested tea leaves' dosing device is suitable to dose natural crushed tea leaves. The dosing is continuous and goes on until the gear of the dosing device is on. The even changing of tea leaves' dose is possible. The dosing does not depend on the filling degree of tea leaves' container and may be adjusted to wide range of dosing. If the dosing disc is replaced by the disc with grooves of bigger dimension, it is possible to dose rougher tea leaves.

The usage of additional sensor allows regulating tea compression in the tea making chamber with respect to the dose of tea leaves.

## Claims

1. The automatic tea maker, where the automatic coffee maker is used, comprising the containers for tea(1) leaves and condiment (8) products, condiment dosing device (9), tea leaves' dosing device (2) with a gear, reducer of water pressure (6), water and vapour heaters (7), tea making module (3) with thick-removal device, gear and control device (4) of tea making module (3), tea release device (10), container of thick, control unit of machine (11) and display with remote control (12), **characterized in that** the tea leaves' dosing device (2) comprises two inter-touching dosing (13) and directing (14) discs,
the dosing disc (13) has radial grooves (13a) and is put on the gear axle (19),
the directing disc (14) is stationary and made concave, it has a central hole and touches with the plane of dosing disc (13) by the circular band(14a) going around its edge,
the diagonal teeth (14b) are made in the concave surface of the directing disc (14) from the central hole to the circular band, the tea making module (3) has position sensors (5(28)), which are connected with the gear and control device (4) and control unit of the machine (11) and which may control the size of chamber of tea making module (3) depending on the required dose of tea leaves, the volume of the chamber of tea making module (3) is set such as to have the dose of dry tea leaves inside the chamber without any mechanical pressure.

2. The automatic tea maker according to claim 1, **characterized in that** the dosing disc (13) has four semicircular radial grooves (13a), which diameter is 3-10 mm, better 3,3 mm, while the teeth of directing disc (14) are in the form of irregular triangle, the width of circular band is 1-4 mm, better - 1 mm.

3. The method of operation of the automatic tea maker as claimed in claims 1, 2, **characterized in that** the tea mixture comprising the crushed tea leaves to the following fraction - black tea - to 0,67 mm size, green tea - to 0,2 mm and mixed by taking 77 - 93% of black tea and 7 - 23 % of green tea, puts into the container of tea leaves in the automatic tea maker and doses in the automatic tea maker for one portion (200 ml) - of tea - 2-6 g, better 5,2 g of tea mixture, fills the tea making module's chamber with tea leaves without any mechanical pressure, lets through the tea making chamber with tea leaves the water which pressure - 1,2-1,6 bar, temperature 96-98°C, brewing time 20 s, supplements the prepared tea with additives (condiment and milk).

## Patentansprüche

1. Der automatische Teekocher, in dem die automatische Kaffeemaschine verwendet wird, umfasst Behälter für Teeblätter (1) und Gewürze (8), ein Dosiergerät für Gewürze (9), ein Dosiergerät für Teeblätter (2) mit Getriebe, ein Reduzierstück für den Wasserdruck (6), Wasser- und Dampferhitzer (7), eine Teekochmodul (3) mit Beseitigungsvorrichtung für Zähflüssiges, Getriebe und Steuergerät (4) des Teekochmoduls (3), Tee-Auslösevorrichtung (10), Behälter für Zähflüssiges, Steuereinheit der Maschine (11) und Display mit Fernbedienung (12); **dadurch gekennzeichnet, dass** das Dosiergerät für Teeblätter (2) zwei sich berührende Dosier- (13) und Richtungsscheiben (14) umfasst, wobei die Dosierscheibe (13) über radiale Nuten (13a) verfügt und auf der Getriebeachse (19) aufliegt, und wobei die Richtungsscheibe (14) ortsfest und konkav ist, über ein mittiges Loch verfügt und die Fläche der Dosierscheibe (13) am kreisförmigen Band (14a), dass um den Rand herum verläuft, berührt, die diagonalen Zähne (14b) verlaufen auf der konkaven Oberfläche der Richtungsscheibe (14) vom mittigen Loch zum kreisförmigen Band hin, das Teekochmodul (3) verfügt über Positionssensoren (5(28)), die mit dem Getriebe- und Steuergerät (4) und der Steuereinheit der Maschine (11) verbunden sind und mit denen man die Größe der Kammer des Teekochmoduls (3) je nach erforderter Menge an Teeblättern kontrollieren kann, das Volumen der Kammer des Teekochmoduls (3) wird so eingestellt, dass die Dosierung der trockenen Teeblätter im Inneren der Kammer keinem mechanischen Druck ausgesetzt ist.

2. Automatischen Teekocher gemäß Antrag 1, **dadurch gekennzeichnet, dass** die Dosierscheibe (13) über vier halbrunde radiale Nuten (13a) mit einem Durchmesser von 3-10 mm, vorzugsweise 3,3 mm, verfügt, während die Zähne der Richtungsscheibe (14) ein unregelmäßiges Dreieck bilden, wobei die Breite des ringförmigen Bandes 1-4 mm, vorzugsweise 1 mm, beträgt.

3. Die Betriebsweise des unter den Anträgen 1, 2 beschriebenen automatischen Teekochers **ist dadurch gekennzeichnet, dass** die Teemischung, umfassend Teeblätter, die auf folgende Größen zerkleinert sind - Schwarztee - auf 0,67 mm Größe, Grüntee - auf 0,2 mm Größe - und im Verhältnis von 77 - 93% Schwarztee zu 7 - 23% Grüntee gemischt sind, in die Behälter für Teeblätter des automatischen Teekochers gegeben wird und im automatischen Teekocher auf eine Portion (200 ml) Tee - 2-6 g, vorzugsweise 5,2 g, der Teemischung - dosiert wird, die Kammer des Teekochmoduls ohne mechanischen Druck mit Teeblättern befüllt wird, das Wasser mit einem Druck von 1,2 - 1,6 bar, einer Temperatur von 96-98°C und einer Brühdauer von 20 s durch die Kammer mit den Teeblättern fließt und der so zubereitete Tee mit Zusatzstoffen (Gewürze und Milch) ergänzt wird.

## Revendications

1. La machine de préparation de thé automatique, lorsque la machine de préparation de café automatique est utilisée, comprenant les réceptacles pour les feuilles de thé (1) et les condiments (8), le dispositif de dosage des condiments (9), le dispositif de dosage des feuilles de thé (2) avec un arbre de transmission, le dispositif de réduction de la pression de l'eau (6), les dispositifs de chauffage de l'eau et de la vapeur (7), le module de préparation de thé (3) comportant un dispositif de retrait du marc de thé, l'arbre de transmission et le dispositif de commande (4) du module de préparation de thé (3), le dispositif pour libérer le thé (10), le réceptacle pour le marc de thé, l'unité de commande de la machine (11) et la télécommande avec écran (12), **caractérisée en ce que** le dispositif de dosage des feuilles de thé (2) comprend deux disques de dosage (13) et de direction (14) en contact mutuel, le disque de dosage (13) comporte des rainures radiales (13a) et est placé sur l'arbre de transmission (19), le disque de direction (14) est à l'arrêt et devient concave, il comporte un trou central et est en contact avec le plan du disque de dosage (13) par le biais de la bande circulaire (14a) s'étendant le long de son bord, les dents obliques (14b) sont formées dans la surface concave du disque de direction (14) du trou central à la bande circulaire, le module de préparation de thé (3) comprend des capteurs de position (5(28)), qui sont connectés à l'arbre de transmission et au dispositif de commande (4) et à l'unité de commande de la machine (11) et qui peuvent commander la taille de la chambre du module de préparation de thé (3) en fonction de la dose requise de feuilles de thé ; le volume de la chambre du module de préparation de thé (3) est réglé de telle sorte que la dose de feuilles de thé à l'état sec se trouve à l'intérieur de la chambre sans pression mécanique.

2. La machine de préparation de thé automatique selon la revendication 1, **caractérisée en ce que** le disque de dosage (13) comporte quatre rainures radiales semi-circulaires (13a), dont le diamètre est de 3 à 10 mm, de préférence de 3,3 mm, et les dents du disque de direction (14) se présentent sous la forme de triangles irréguliers, la largeur de la bande circulaire est de 1 à 4 mm, de préférence de 1 mm.

3. Le procédé de fonctionnement de la machine de préparation de thé automatique conformément aux revendications 1, 2, **caractérisé en ce que** le mélange de thé comportant les feuilles de thé broyées dans les proportions suivantes - thé noir ,d'une taille de 0,67 mm, et thé vert, d'une taille de 0,2 mm - et mélangées en prenant entre 77 et 93 % de thé noir et entre 7 et 23 % de thé vert, est placé dans le réceptacle réservé aux feuilles de thé dans la machine de préparation de thé automatique et dosé dans la machine de préparation de thé automatique pour une portion (200 ml) de thé - entre 2 et 6 g, de préférence un mélange de thé de 5,2 g -, la chambre du module de préparation de thé est remplie de feuilles de thé sans pression mécanique, et la machine laisse passer à travers la chambre de préparation de thé contenant les feuilles de thé l'eau, dont la pression s'établit entre 1,2 et 1,6 bars et la température est située entre 96 et 98 °C, pour un temps d'infusion de 20 s, et des additifs sont ajoutés au thé préparé (condiment et lait).
